(19) Europäisches Patentamt European Patent Office Office européen des brevets

(11) **EP 3 981 611 B1**

(12) **EUROPEAN PATENT SPECIFICATION**

(45) Date of publication and mention of the grant of the patent:
**23.07.2025  Bulletin 2025/30**

(21) Application number: **21195691.7**

(22) Date of filing: **09.09.2021**

(51) International Patent Classification (IPC):
**B60C 1/00** (2006.01)     **C08K 5/01** (2006.01)
**C08K 5/18** (2006.01)     **C08L 9/00** (2006.01)
**C08L 91/06** (2006.01)     **C08K 3/04** (2006.01)
**C08L 7/00** (2006.01)     **C09C 1/56** (2006.01)

(52) Cooperative Patent Classification (CPC):
(C-Sets available)
**B60C 1/0025; B60C 13/00;** B60C 2013/007;
B60C 2200/06; C01P 2004/64; C08K 2201/005;
C08K 2201/006; C08L 91/06; C09C 1/565    (Cont.)

(54) **HEAVY DUTY TIRE**

SCHWERLASTREIFEN

PNEU POIDS LOURD

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.10.2020  JP 2020171333**

(43) Date of publication of application:
**13.04.2022  Bulletin 2022/15**

(73) Proprietor: **Sumitomo Rubber Industries, Ltd.
Kobe-shi, Hyogo 651-0072 (JP)**

(72) Inventor: **HIMEDA, Shingo
Kobe-shi, 651-0072 (JP)**

(74) Representative: **TBK
Bavariaring 4-6
80336 München (DE)**

(56) References cited:
**EP-A1- 3 450 202       EP-A1- 3 693 186
US-A1- 2020 131 346**

(52) Cooperative Patent Classification (CPC): (Cont.)

C-Sets
**C08L 7/00, C08L 9/00, C08L 91/00, C08L 91/06,
C08K 3/04, C08K 5/18, C08K 5/09, C08K 3/22,
C08K 3/06;
C08L 7/00, C08L 9/00, C08L 91/00, C08L 91/06,
C08K 9/02, C08K 5/18, C08K 5/09, C08K 3/22,
C08K 3/06**

**Description**

TECHNICAL FIELD

The present disclosure relates to a heavy duty tire.

BACKGROUND ART

Heavy duty tires to be mounted on trucks, buses, or other heavy duty vehicles require various properties including durability (cut resistance) and handling stability. In recent years, with the increase in transportation speed, it has become not uncommon for these tires to be run continuously at high speed under high-load conditions. Therefore, there is a need to improve their cut resistance during high-load and high-speed running.
US2020131346 discloses a heavy duty pneumatic tire having excellent abrasion resistance.

SUMMARY OF DISCLOSURE

TECHNICAL PROBLEM

The present disclosure aims to solve the above problem and provide a heavy duty tire having improved cut resistance during high-load and high-speed running.

SOLUTION TO PROBLEM

The present disclosure relates to a heavy duty tire, including a sidewall including a sidewall rubber composition, the sidewall rubber composition containing at least one isoprene-based rubber, at least one polybutadiene rubber, and at least one oxidized carbon black having an average particle size of 30 nm or less,

the sidewall rubber composition containing, based on 100% by mass of the rubber components therein, at least 5% by mass but less than 50% by mass of the at least one polybutadiene rubber,
the heavy duty tire satisfying the following relationships (1) and (2):

(1) Amount of isoprene-based rubber > Amount of polybutadiene rubber
wherein "Amount of isoprene-based rubber" and "Amount of polybutadiene rubber" represent the amounts (% by mass) of the at least one isoprene-based rubber and the at least one polybutadiene rubber, respectively, based on 100% by mass of the rubber components in the sidewall rubber composition;
(2) Thickness at widest point > $-0.14 \times$ Amount of polybutadiene rubber + 10.0
wherein "Thickness at widest point" represents the thickness (mm) of the sidewall at the widest point, and "Amount of polybutadiene rubber" represents the amount (% by mass) of the at least one polybutadiene rubber based on 100% by mass of the rubber components in the sidewall rubber composition.

ADVANTAGEOUS EFFECTS OF DISCLOSURE

The heavy duty tire of the present disclosure includes a sidewall including a sidewall rubber composition. The sidewall rubber composition contains an isoprene-based rubber, a polybutadiene rubber, and an oxidized carbon black having an average particle size of 30 nm or less. The sidewall rubber composition contains, based on 100% by mass of the rubber components therein, at least 5% by mass but less than 50% by mass of the polybutadiene rubber. The heavy duty tire satisfies relationship (1) with respect to the amounts (% by mass) of the isoprene-based rubber and the polybutadiene rubber based on 100% by mass of the rubber components in the sidewall rubber composition. The heavy duty tire satisfies relationship (2) with respect to the thickness (mm) of the sidewall at the widest point and the amount (% by mass) of the polybutadiene rubber based on 100% by mass of the rubber components in the sidewall rubber composition. Thus, it is possible to provide a heavy duty tire having improved cut resistance during high-load and high-speed running.

BRIEF DESCRIPTION OF DRAWINGS

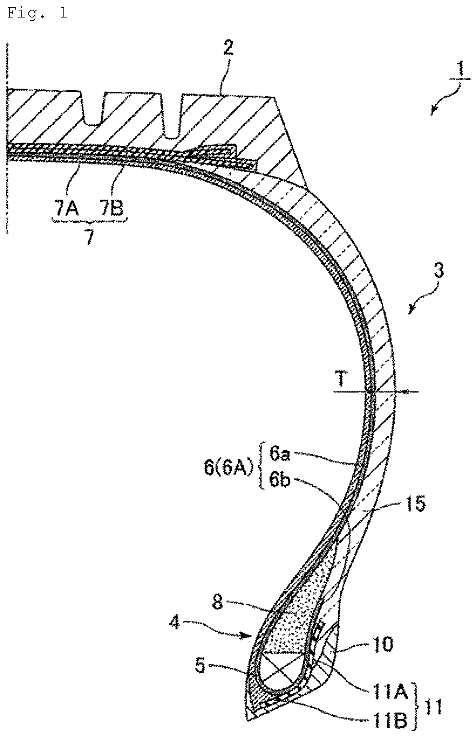

Fig. 1 shows an exemplary schematic diagram of a heavy duty tire according to an embodiment of this disclosure.

DESCRIPTION OF EMBODIMENTS

The heavy duty tire of the present disclosure includes a sidewall including a sidewall rubber composition which contains predetermined amounts of an isoprene-based rubber, a polybutadiene rubber, and an oxidized carbon black having an average particle size of 30 nm or less, and satisfies relationships (1) and (2). Thus, it is possible to provide a heavy duty tire having improved cut resistance during high-load and high-speed running.

The mechanism for this advantageous effect is not clear but is believed to be as follows.

Since rubber components including at least 5% by mass but less than 50% by mass (i.e., less than half the amount of the rubber components) of a polybutadiene rubber and an oxidized carbon black having an average particle size of 30 nm or less are incorporated, a polybutadiene rubber phase is distributed through an isoprene-based rubber phase, and the rubber phases and their interface are reinforced by the oxidized carbon black, resulting in improved cut resistance. Moreover, the oxidized carbon black has better low heat build-up properties than usual carbon black and thus provides reduction in heat build-up in the sidewall even during high-load, high-speed, and off-road running, thereby reducing deterioration in rubber reinforcement during tire service. Furthermore, regarding crack growth resistance which generally tends to be deteriorated as a trade-off when the composition has a low polybutadiene rubber content, since the thickness of the sidewall at the widest point and the amount of the polybutadiene rubber are controlled to satisfy the relationship (2): Thickness at widest point > - 0.14 × Amount of polybutadiene rubber + 10.0, the thickness of the sidewall is increased with a decrease in the amount of the polybutadiene rubber, so that surface distortion can be reduced and thus good crack growth resistance can be maintained. Therefore, the isoprene-based rubber and the polybutadiene rubber are reinforced by the oxidized carbon black, and further the distortion at the side portion can be optimized. Moreover, satisfying relationship (2) also provides good fuel economy because the thickness at the widest point is adjusted to be smaller than 10.0 mm and can also be reduced with an increase in the amount of the polybutadiene rubber. Thus, performance as a sidewall rubber of a heavy duty tire having both fuel economy and cut resistance during high-load and high-speed running is provided. For these reasons, it is believed that a heavy duty tire having improved cut resistance during high-load and high-speed running can be provided.

Thus, the heavy duty tire solves the problem (purpose) of improving cut resistance during high-load and high-speed running by formulating a heavy duty tire to include a sidewall including a sidewall rubber composition that contains predetermined amounts of an isoprene-based rubber, a polybutadiene rubber, and an oxidized carbon black having an average particle size of 30 nm or less and to satisfy relationships (1) and (2). In other words, the parameters of relationship (1) "Amount of isoprene-based rubber > Amount of polybutadiene rubber" and relationship (2) "Thickness at widest point > -0.14 × Amount of polybutadiene rubber + 10.0" do not define the problem (purpose), and the problem herein is to improve cut resistance during high-load and high-speed running. In order to solve this problem, the formulation satisfying the parameters has been devised.

The heavy duty tire satisfies the following relationship (1):

(1) Amount of isoprene-based rubber > Amount of polybutadiene rubber

wherein "Amount of isoprene-based rubber" and "Amount of polybutadiene rubber" represent the amounts (% by mass) of the isoprene-based rubber(s) and the polybutadiene rubber(s), respectively, based on 100% by mass of the rubber components in the sidewall rubber composition.

From the standpoint of cut resistance during high-load and high-speed running, the value of "Amount (% by mass) of isoprene-based rubber" - "Amount (% by mass) of polybutadiene rubber" is preferably 10% by mass or higher, more preferably 20% by mass or higher, still more preferably 40% by mass or higher, particularly preferably 50% by mass or higher. The upper limit is not limited, but it is preferably 90% by mass or lower, more preferably 80% by mass or lower, still more preferably 70% by mass or lower, particularly preferably 60% by mass or lower.

The heavy duty tire satisfies the following relationship (2):

$$(2) \text{ Thickness at widest point} > -0.14 \times \text{Amount of polybutadiene rubber} + 10.0$$

wherein "Thickness at widest point" represents the thickness (mm) of the sidewall (vulcanized sidewall rubber) at the widest point, and "Amount of polybutadiene rubber" represents the amount (% by mass) of the polybutadiene rubber(s) based on 100% by mass of the rubber components in the sidewall rubber composition.

From the standpoint of cut resistance during high-load and high-speed running, the value of "Thickness at widest point" - "-0.14 × Amount of polybutadiene rubber + 10.0" is preferably 0.5 or higher, more preferably 0.8 or higher, still more preferably 1.6 or higher, particularly preferably 2.0 or higher. The upper limit is not limited, but it is preferably 7.0 or lower, more preferably 5.0 or lower, still more preferably 3.6 or lower, particularly preferably 3.0 or lower.

From the standpoint of cut resistance during high-load and high-speed running, the thickness of the sidewall at the widest point may suitably be at least 4.0 mm but less than 10.0 mm. The lower limit is preferably 5.0 mm or more, more preferably 6.0 mm or more, still more preferably 7.0 mm or more, particularly preferably 7.5 mm or more. The upper limit is preferably 9.5 mm or less, more preferably 9.0 mm or less, still more preferably 8.5 mm or less, particularly preferably 8.0 mm or less.

Herein, the term "Thickness at widest point (thickness of the sidewall at the widest point)" refers to the thickness of the sidewall measured at a position where the tire inflated to a specified internal pressure has the largest width (at the axially outer end of the tire).

(Rubber component)

The sidewall rubber composition contains one or more isoprene-based rubbers and one or more polybutadiene rubbers (BR). The isoprene-based rubber(s) and the polybutadiene rubber(s) may each include a single polymer or may include two or more polymers.

The amount of the isoprene-based rubbers based on 100% by mass of the rubber components in the sidewall rubber composition is preferably 5% by mass or more, more preferably 50% by mass or more, still more preferably 60% by mass or more, particularly preferably 70% by mass or more. The upper limit of the amount is preferably 95% by mass or less, more preferably 85% by mass or less, still more preferably 80% by mass or less. When the amount is within the range indicated above, cut resistance during high-load and high-speed running tends to be improved.

Examples of the isoprene-based rubbers include natural rubbers (NR), polyisoprene rubbers (IR), refined NR, modified NR, and modified IR. Examples of the NR include those commonly used in the rubber industry such as SIR20, RSS#3, and TSR20. Any IR may be used, and examples include those commonly used in the rubber industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone, or two or more of these may be used in combination.

The amount of the BR based on 100% by mass of the rubber components in the sidewall rubber composition is at least 5% by mass but less than 50% by mass. The lower limit is preferably 10% by mass or more, more preferably 15% by mass or more, still more preferably 20% by mass or more. The upper limit is preferably 45% by mass or less, more preferably 40% by mass or less, still more preferably 35% by mass or less, particularly preferably 30% by mass or less. When the amount is within the range indicated above, cut resistance during high-load and high-speed running tends to be improved.

From the standpoint of cut resistance during high-load and high-speed running, the cis content of the BR is preferably 90% by mass or higher, more preferably 95% by mass or higher, still more preferably 97% by mass or higher. A higher cis content is considered to result in a more linear molecule which provides a better balance between low heat build-up properties and durability. Thus, it is believed that a heavy duty tire having improved cut resistance during high-load and high-speed running can be provided.

Herein, the cis content (cis-1,4-bond content) is determined by infrared absorption spectrum analysis or calculated from the signal intensities measured by NMR analysis.

Any BR may be used. Examples include those commonly used in the tire industry, such as high-cis BR, BR containing 1,2-syndiotactic polybutadiene crystals (SPB-containing BR), polybutadiene rubbers synthesized using rare earth catalysts (rare earth-catalyzed BR), and polybutadiene rubbers modified by tin compounds (tin-modified BR). Commercial products available from Ube Industries, Ltd., JSR Corporation, Asahi Kasei Corporation, Zeon Corporation, etc. may be used as the BR. These may be used alone, or two or more of these may be used in combination.

The BR may be unmodified or modified BR.

The modified BR may be any BR having a functional group interactive with filler such as silica. Examples include a chain end-modified BR obtained by modifying at least one chain end of BR with a compound (modifier) having the functional group (i.e., a chain end-modified BR terminated with the functional group); a backbone-modified BR having the functional group in the backbone; a backbone- and chain end-modified BR having the functional group in both the backbone and the chain end (e.g., a backbone- and chain end-modified BR in which the backbone has the functional group and at least one chain end is modified with the modifier); and a chain end-modified BR into which a hydroxy or epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

The BR may be commercially available from Ube Industries, Ltd., JSR Corporation, Asahi Kasei Corporation, Zeon Corporation, etc.

Other rubber components that may be used in the sidewall rubber composition are not limited, and rubbers used in the tire field may be used. Examples include diene rubbers such as styrene-butadiene rubbers (SBR), acrylonitrile-butadiene rubbers (NBR), chloroprene rubbers (CR), butyl rubbers (IIR), and styrene-isoprene-butadiene copolymer rubbers (SIBR). These rubber components may be used alone, or two or more of them may be used in combination.

From the standpoint of cut resistance during high-load and high-speed running, the combined amount of the isoprene-based rubbers and the BR based on 100% by mass of the rubber components in the sidewall rubber composition is preferably 80% by mass or more, more preferably 90% by mass or more, still more preferably 95% by mass or more, and may be 100% by mass.

(Oxidized carbon black)

The sidewall rubber composition contains one or more oxidized carbon blacks having an average particle size of 30 nm or less. From the standpoint of cut resistance during high-load and high-speed running, the average particle size is preferably 27 nm or less, more preferably 25 nm or less, still more preferably 24 nm or less, particularly preferably 23 nm or less. The lower limit is not limited, but from the standpoint of properties such as dispersibility, it is preferably 5 nm or more, more preferably 10 nm or more, still more preferably 15 nm or more, particularly preferably 20 nm or more.

The average particle size refers to a number average particle size as determined using a transmission electron microscope.

The nitrogen adsorption specific surface area ($N_2SA$) of the oxidized carbon blacks is preferably 80 $m^2/g$ or more, more preferably 100 $m^2/g$ or more, still more preferably 105 $m^2/g$ or more, particularly preferably 110 $m^2/g$ or more. The $N_2SA$ is preferably 180 $m^2/g$ or less, more preferably 150 $m^2/g$ or less, still more preferably 130 $m^2/g$ or less, particularly preferably 120 $m^2/g$ or less.

The $N_2SA$ can be determined in accordance with JIS K6217-2:2001.

The dibutyl phthalate oil absorption (DBP) of the oxidized carbon blacks is preferably 50 ml/100 g or more, more preferably 100 ml/100 g or more, still more preferably 105 ml/100 g or more, particularly preferably 110 ml/100 g or more. The DBP is preferably 180 ml/100 g or less, more preferably 150 ml/100 g or less, still more preferably 130 ml/100 g or less, particularly preferably 120 ml/100 g or less.

The DBP can be determined in accordance with JIS-K6217-4:2001.

The amount of the oxidized carbon blacks having an average particle size of 30 nm or less per 100 parts by mass of the rubber components in the sidewall rubber composition is preferably 20 parts by mass or more, more preferably 40 parts by mass or more, still more preferably 50 parts by mass or more, particularly preferably 55 parts by mass or more. The upper limit of the amount is not limited, but it is preferably 100 parts by mass or less, more preferably 80 parts by mass or less, still more preferably 70 parts by mass or less, particularly preferably 65 parts by mass or less. When the amount is within the range indicated above, cut resistance during high-load and high-speed running tends to be improved.

Examples of the oxidized carbon blacks include those which can be prepared by known oxidation techniques such as oxidation with ozone, dichromates, or oxidizing acids. The oxidized carbon blacks usually contain functional groups such as carboxyl, hydroxy (OH), aldehyde (CHO), or ketone (CO) (e.g., quinone) groups on the carbon black surface. From the standpoint of affinity and bonding with rubber components, the amount of such functional groups per 100 g of the carbon black is preferably 0.5 to 7% by mass, more preferably 1.2 to 5% by mass.

Specifically, the oxidized carbon blacks may be prepared, for example, by treating a usual carbon black with hydrogen peroxide or ozone to produce an oxidized carbon black that has carboxyl and/or hydroxy groups on its surface (see, for example, U.S. Patent Publication No. 2013/0046064).

The sidewall rubber composition may contain carbon blacks other than the oxidized carbon blacks as long as they do not impair the advantageous effect. Examples of such carbon blacks include but not limited to carbon blacks known in the rubber field, such as N134, N110, N220, N234, N219, N339, N330, N326, N351, N550, and N762. Commercial products available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. may be used. These may be used alone, or two or more of these may be used in combination.

(Other fillers)

Any filler other than carbon blacks may be used such as materials known in the rubber field. Examples include inorganic fillers such as silicas, calcium carbonate, talc, alumina, clay, aluminum hydroxide, aluminum oxide, and mica. Silicas are preferred among these.

Examples of usable silicas include dry silica (anhydrous silica) and wet silica (hydrous silica). Wet silica is preferred among these because it contains a large number of silanol groups. Commercial products available from Degussa, Rhodia, Tosoh Silica Corporation, Solvay Japan, Tokuyama Corporation, etc. may be used. These may be used alone, or two or more of these may be used in combination.

The nitrogen adsorption specific surface area ($N_2SA$) of the silicas is preferably 50 $m^2/g$ or more, more preferably 100 $m^2/g$ or more, still more preferably 150 $m^2/g$ or more, particularly preferably 170 $m^2/g$ or more. Moreover, the upper limit of the $N_2SA$ of the silicas is not limited, but it is preferably 350 $m^2/g$ or less, more preferably 250 $m^2/g$ or less, still more preferably 200 $m^2/g$ or less. When the $N_2SA$ is within the range indicated above, cut resistance during high-load and high-speed running tends to be improved.

The $N_2SA$ of the silicas is determined by a BET method in accordance with ASTM D3037-93.

The amount of the silicas, if present, per 100 parts by mass of the rubber components in the sidewall rubber composition is preferably 5 parts by mass or more, more preferably 10 parts by mass or more, still more preferably 15 parts by mass or more. The upper limit of the amount is preferably 60 parts by mass or less, more preferably 40 parts by mass or less, still more preferably 30 parts by mass or less. When the amount is within the range indicated above, cut resistance during high-load and high-speed running tends to be improved.

The sidewall rubber composition which contains one or more silicas preferably further contains one or more silane coupling agents.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Commercial products available from Degussa, Momentive, Shin-Etsu Silicone, Tokyo Chemical Industry Co., Ltd., AZmax. Co., Dow Corning Toray Co., Ltd., etc. may be used. These may be used alone, or two or more of these may be used in combination.

The amount of the silane coupling agents per 100 parts by mass of the silicas in the sidewall rubber composition is preferably 0.1 parts by mass or more, more preferably 3 parts by mass or more, still more preferably 5 parts by mass or more. The upper limit of the amount is preferably 50 parts by mass or less, more preferably 20 parts by mass or less, still more preferably 15 parts by mass or less. When the amount is within the range indicated above, cut resistance during high-load and high-speed running tends to be improved.

The amount of the fillers (the total amount of the fillers) per 100 parts by mass of the rubber components in the sidewall rubber composition is preferably 20 parts by mass or more, more preferably 40 parts by mass or more, still more preferably 50 parts by mass or more, particularly preferably 55 parts by mass or more. The upper limit of the total amount is not limited, but it is preferably 100 parts by mass or less, more preferably 80 parts by mass or less, still more preferably 70 parts by mass or less, particularly preferably 65 parts by mass or less. When the total amount is within the range indicated above, cut resistance during high-load and high-speed running tends to be improved.

From the standpoint of cut resistance during high-load and high-speed running, the content of the oxidized carbon blacks having an average particle size of 30 nm or less based on 100% by mass of the fillers in the sidewall rubber composition is preferably 80% by mass or higher, more preferably 90% by mass or higher, still more preferably 95% by mass or higher, and may be 100% by mass.

(Phenylenediamine compound)

From the standpoint of cut resistance during high-load and high-speed running, the sidewall rubber composition preferably contains one or more phenylenediamine compounds.

The amount of the phenylenediamine compounds per 100 parts by mass of the rubber components in the sidewall rubber composition is preferably 1.0 part by mass or more, more preferably 3.0 parts by mass or more, still more preferably 4.0 parts by mass or more, particularly preferably 5.0 parts by mass or more. The upper limit of the amount is not limited, but it is preferably 10.0 parts by mass or less, more preferably 8.0 parts by mass or less, still more preferably 6.0 parts by mass or less. When the amount is within the range indicated above, cut resistance during high-load and high-speed running tends to be improved.

Any phenylenediamine compound may be used, including compounds known as antioxidants in the rubber field.

Specific examples include N-isopropyl-N'-phenyl-p-phenylenediamine, N-(1,3-dimethylbutyl)-N'-phenyl-p-phenylenediamine, and N,N'-di-2-naphthyl-p-phenylenediamine. These may be used alone, or two or more of these may be used in combination. N-(1,3-dimethylbutyl)-N'-phenyl-p-phenylenediamine (6PPD) is preferred among these.

The phenylenediamine antioxidants may be commercially available from Seiko Chemical Co., Ltd., Sumitomo Chemical Co., Ltd., Ouchi Shinko Chemical Industrial Co., Ltd., Flexsys, etc.

The sidewall rubber composition may further contain other antioxidants.

Non-limiting examples of the other antioxidants include naphthylamine antioxidants such as phenyl-$\alpha$-naphthy-lamine; diphenylamine antioxidants such as octylated diphenylamine and 4,4'-bis($\alpha,\alpha$'-dimethylbenzyl)diphenylamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These may be used alone, or two or more of these may be used in combination. Preferred among these are quinoline antioxidants, with 2,2,4-trimethyl-1,2-dihydroquinoline polymer (TMQ) being more preferred.

The amount of the other antioxidants, if present, per 100 parts by mass of the rubber components in the sidewall rubber composition is preferably 0.1 parts by mass or more, more preferably 0.5 parts by mass or more, but is preferably 3.0 parts by mass or less, more preferably 2.0 parts by mass or less. When the amount is within the range indicated above, cut resistance during high-load and high-speed running tends to be improved.

(Normal alkane, Isoalkane)

From the standpoint of cut resistance during high-load and high-speed running, the sidewall rubber composition may suitably contain one or more C20-C50 normal alkanes and/or C20-C50 isoalkanes.

The C20-C50 normal alkanes and/or C20-C50 isoalkanes may be incorporated into the sidewall rubber composition, for example, by using one or more waxes known in the rubber field.

Examples of such waxes include petroleum waxes such as paraffin waxes and microcrystalline waxes; naturally-occurring waxes such as plant waxes and animal waxes; and synthetic waxes such as polymers of ethylene, propylene, or other similar monomers. These may be used alone, or two or more of these may be used in combination. From the standpoint of cut resistance during high-load and high-speed running, petroleum waxes are preferred among these, with paraffin waxes being more preferred.

The carbon number distribution of the waxes can be determined as described below.

<Carbon number distribution>

The carbon number distribution may be determined using capillary GC as a measurement apparatus, an aluminum-coated capillary column as a column, and helium as a carrier gas at a flow rate of 4 ml/min, a column temperature of 180 to 390°C, and a temperature increase rate of 15°C/min.

The combined amount of the C20-C50 normal alkanes and C20-C50 isoalkanes per 100 parts by mass of the rubber components in the sidewall rubber composition is preferably 0.5 parts by mass or more, more preferably 0.8 parts by mass or more, still more preferably 1.0 part by mass or more. The combined amount is preferably 5.0 parts by mass or less, more preferably 3.0 parts by mass or less, still more preferably 2.0 parts by mass or less.

(Plasticizer)

The sidewall rubber composition may contain one or more plasticizers. The term "plasticizer" refers to a material which can impart plasticity to rubber components, and examples include liquid plasticizers (plasticizers that are liquid at room temperature (25°C)) and resins (resins that are solid at room temperature (25°C)).

The amount of the plasticizers (the total amount of the plasticizers) per 100 parts by mass of the rubber components in the sidewall rubber composition is preferably 20.0 parts by mass or less, more preferably 10.0 parts by mass or less, still more preferably 5.0 parts by mass or less, particularly preferably 2.0 parts by mass or less. The lower limit is not limited and may be 0 parts by mass, but it is preferably 0.5 parts by mass or more, more preferably 1.0 part by mass or more. When the amount is within the range indicated above, cut resistance during high-load and high-speed running tends to be improved.

Any liquid plasticizer (plasticizer that is liquid at room temperature (25°C)) may be used in the sidewall rubber composition. Examples include oils and liquid polymers (e.g., liquid resins, liquid diene polymers, liquid farnesene-based polymers). These may be used alone, or two or more of these may be used in combination.

The amount of the liquid plasticizers per 100 parts by mass of the rubber components in the sidewall rubber composition is preferably 20.0 parts by mass or less, more preferably 10.0 parts by mass or less, still more preferably 5.0 parts by mass or less, particularly preferably 2.0 parts by mass or less. The lower limit is not limited and may be 0 parts by mass, but it is preferably 0.5 parts by mass or more, more preferably 1.0 part by mass or more. When the amount is within the range indicated above, cut resistance during high-load and high-speed running tends to be improved. It should be noted that the amount of the oils described later desirably falls within the same range (the amount of the oils includes the amount of the oils contained in extender oils, if used).

Examples of the oils include process oils, plant oils, and mixtures thereof. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Commercial oils available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., The Nisshin Oillio Group, etc. may be used. Process oils such as paraffinic process oils, aromatic process oils, and naphthenic process oils, and plant oils are preferred among these.

Examples of the liquid resins include terpene resins (including terpene phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins. Hydrogenated products of the foregoing resins may also be used.

Examples of the liquid diene polymers include liquid styrene-butadiene copolymers (liquid SBR), liquid polybutadiene polymers (liquid BR), liquid isoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers, all of which are liquid at 25°C. The chain end(s) or backbone of these polymers may be modified with a polar group. Hydrogenated products of these polymers may also be used.

Examples of the resins (resins that are solid at room temperature (25°C)) which may be used in the sidewall rubber composition include aromatic vinyl polymers, coumarone-indene resins, coumarone resins, indene resins, phenol resins, rosin resins, petroleum resins, terpene resins, and acrylic resins, all of which are solid at room temperature (25°C). Moreover, the resins may be hydrogenated. These may be used alone, or two or more of these may be used in combination. From the standpoint of cut resistance during high-load and high-speed running, aromatic vinyl polymers, petroleum resins, and terpene resins are preferred among these.

The amount of the resins per 100 parts by mass of the rubber components in the sidewall rubber composition is preferably 20.0 parts by mass or less, more preferably 10.0 parts by mass or less, still more preferably 5.0 parts by mass or less, particularly preferably 2.0 parts by mass or less. The lower limit is not limited and may be 0 parts by mass, but it is preferably 0.5 parts by mass or more, more preferably 1.0 part by mass or more. When the amount is within the range indicated above, cut resistance during high-load and high-speed running tends to be improved.

The softening point of the resins is preferably 60°C or higher, more preferably 70°C or higher, still more preferably 80°C or higher. The upper limit is preferably 160°C or lower, more preferably 130°C or lower, still more preferably 115°C or lower. When the softening point is within the range indicated above, cut resistance during high-load and high-speed running tends to be improved.

The softening point of the resins is determined in accordance with JIS K 6220-1:2001 using a ring and ball softening point measuring apparatus and defined as the temperature at which the ball drops down.

The term "aromatic vinyl polymer" refers to a polymer that contains an aromatic vinyl monomer as a structural unit. Examples include resins produced by polymerization of α-methylstyrene and/or styrene, more specifically styrene homopolymers (styrene resins), α-methylstyrene homopolymers (α-methylstyrene resins), copolymers of α-methylstyrene and styrene, and copolymers of styrene and other monomers.

The term "coumarone-indene resin" refers to a resin that contains coumarone and indene as main monomer components forming the skeleton (backbone) of the resin. Examples of monomer components which may be contained in the skeleton in addition to coumarone and indene include styrene, α-methylstyrene, methylindene, and vinyltoluene.

The term "coumarone resin" refers to a resin that contains coumarone as a main monomer component forming the skeleton (backbone) of the resin.

The term "indene resin" refers to a resin that contains indene as a main monomer component forming the skeleton (backbone) of the resin.

Examples of the phenol resins include known phenol resins such as polymers produced by reaction of phenol with aldehydes such as formaldehyde, acetaldehyde, or furfural using acid or alkali catalysts. Those produced by reaction using acid catalysts (e.g., novolac-type phenol resins) are preferred among these.

Examples of the rosin resins include rosin-based resins as typified by natural rosins, polymerized rosins, modified rosins, esterified compounds thereof, and hydrogenated products thereof.

Examples of the petroleum resins include C5 resins, C9 resins, C5/C9 resins, and dicyclopentadiene (DCPD) resins, and hydrogenated products thereof. DCPD resins or hydrogenated DCPD resins are preferred among these.

The term "terpene resin" refers to a polymer that contains terpene as a structural unit. Examples include polyterpene resins produced by polymerization of terpene compounds, and aromatic modified terpene resins produced by polymerization of terpene compounds and aromatic compounds. Examples of the aromatic modified terpene resins include terpene phenol resins made from terpene compounds and phenolic compounds, terpene styrene resins made from terpene compounds and styrene compounds, and terpene phenol styrene resins made from terpene compounds, phenolic compounds, and styrene compounds. Examples of the terpene compounds include α-pinene and β-pinene. Examples of the phenolic compounds include phenol and bisphenol A. Examples of the aromatic compounds include styrene compounds (e.g., styrene, α-methylstyrene).

The term "acrylic resin" refers to a polymer that contains an acrylic monomer as a structural unit. Examples include styrene acrylic resins such as styrene acrylic resins containing carboxyl groups which are produced by copolymerization of aromatic vinyl monomer components and acrylic monomer components. Solvent-free, carboxyl group-containing styrene acrylic resins are suitable among these.

The plasticizers may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

(Other materials)

The sidewall rubber composition preferably contains one or more types of stearic acid. The amount of the stearic acid per 100 parts by mass of the rubber components in the sidewall rubber composition is preferably 0.5 to 10 parts by mass, more preferably 0.5 to 5 parts by mass.

The stearic acid may be conventional ones, e.g., available from NOF Corporation, Kao Corporation, FUJIFILM Wako Pure Chemical Corporation, or Chiba Fatty Acid Co., Ltd.

The sidewall rubber composition preferably contains one or more types of zinc oxide. The amount of the zinc oxide per 100 parts by mass of the rubber components in the sidewall rubber composition is preferably 0.5 to 10 parts by mass, more preferably 1 to 5 parts by mass.

The zinc oxide may be conventional ones, e.g., available from Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The sidewall rubber composition preferably contains one or more types of sulfur in order to moderately crosslink the polymer chains and provide good properties.

The amount of the sulfur per 100 parts by mass of the rubber components in the sidewall rubber composition is preferably 0.1 parts by mass or more, more preferably 0.3 parts by mass or more, still more preferably 0.5 parts by mass or more. The amount is preferably 4.0 parts by mass or less, more preferably 3.0 parts by mass or less, still more preferably 2.0 parts by mass or less.

Examples of the sulfur include those commonly used in the rubber industry, such as powdered sulfur, precipitated sulfur, colloidal sulfur, insoluble sulfur, highly dispersible sulfur, and soluble sulfur. Commercial products available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. may be used. These may be used alone, or two or more of these may be used in combination.

The sidewall rubber composition preferably contains one or more vulcanization accelerators.

The amount of the vulcanization accelerators in the sidewall rubber composition is not limited and may be arbitrarily determined according to the desired cure rate or crosslink density. The amount of the vulcanization accelerators per 100 parts by mass of the rubber components is preferably 0.3 parts by mass or more, more preferably 0.5 parts by mass or more, still more preferably 0.8 parts by mass or more. The upper limit is preferably 8.0 parts by mass or less, more preferably 6.0 parts by mass or less, still more preferably 5.0 parts by mass or less.

Any type of vulcanization accelerator may be used, including usual ones. Examples of the vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone, or two or more of these may be used in combination. Sulfenamide, guanidine, and benzothiazole vulcanization accelerators are preferred among these.

In addition to the above-mentioned components, the sidewall rubber composition may contain compounding agents commonly used in the tire industry, for example, materials such as mold-release agents.

From the standpoint of cut resistance during high-load and high-speed running, the sidewall rubber composition may suitably satisfy the following relationship (3):

(3) Content of oxidized carbon black having average particle size of 30 nm or less > Polybutadiene rubber content
wherein "Content of oxidized carbon black having average particle size of 30 nm or less" and "Polybutadiene rubber content" represent the contents (% by mass) of the oxidized carbon blacks having an average particle size of 30 nm or less and the polybutadiene rubbers, respectively, based on 100% by mass of the sidewall rubber composition.

When relationship (3) is satisfied, it is considered that the oxidized carbon blacks can be easily distributed through the isoprene-based rubbers to enhance the compatibility with the isoprene-based rubbers, so that the reinforcement by the oxidized carbon blacks can be enhanced. Thus, it is believed that a heavy duty tire having improved cut resistance during high-load and high-speed running can be provided.

The value of "Content (% by mass) of oxidized carbon black having average particle size of 30 nm or less" - "Polybutadiene rubber content (% by mass)" is preferably 5.0% by mass or higher, more preferably 10.0% by mass or higher, still more preferably 15.0% by mass or higher, particularly preferably 17.0% by mass or higher. The upper limit is not limited, but it is preferably 35.0% by mass or lower, more preferably 30.0% by mass or lower, still more preferably 25.0% by mass or lower, particularly preferably 23.0% by mass or lower. When the value is within the range indicated above, cut resistance during high-load and high-speed running tends to be improved.

From the standpoint of cut resistance during high-load and high-speed running, the content (% by mass) of the oxidized carbon blacks having an average particle size of 30 nm or less based on 100% by mass of the sidewall rubber composition may suitably be 22.0 to 40.0% by mass. The lower limit is preferably 25.0% by mass or higher, more preferably 27.0% by mass or higher, still more preferably 28.0% by mass or higher. The upper limit is preferably 35.0% by mass or lower, more preferably 33.0% by mass or lower, still more preferably 32.0% by mass or lower.

From the standpoint of cut resistance during high-load and high-speed running, the sidewall rubber composition may suitably satisfy the following relationship (4):

(4) Isoprene-based rubber content/Phenylenediamine compound content < 35
wherein "Isoprene-based rubber content" and
"Phenylenediamine compound content" represent the contents (% by mass) of the isoprene-based rubbers and the phenylenediamine compounds, respectively, based on 100% by mass of the sidewall rubber composition.

When relationship (4) is satisfied so that the amount of the phenylenediamine compounds is increased with an increase in the isoprene-based rubber content, it is considered that the phenylenediamine compounds can be distributed depending on the amount of the isoprene-based rubbers, and that the phenylenediamine compounds coming near the double bonds of the isoprene-based rubbers may interact with the surrounding oxidized carbon blacks so that the movement of the phenylenediamine compounds in the rubber phase is inhibited, resulting in enhanced crack resistance. Thus, it is believed that crack growth starting from a crack on the sidewall surface can be prevented to ensure durability of the sidewall, and therefore a heavy duty tire having improved cut resistance during high-load and high-speed running can be provided.

The value of "Isoprene-based rubber content/Phenylenediamine compound content" is preferably 25 or lower, more preferably 20 or lower, still more preferably 16 or lower, particularly preferably 12 or lower. The lower limit is not limited, but it is preferably 3 or higher, more preferably 5 or higher, still more preferably 7 or higher, particularly preferably 9 or higher. When the value is within the range indicated above, cut resistance during high-load and high-speed running tends to be improved.

From the standpoint of cut resistance during high-load and high-speed running, the content (% by mass) of the phenylenediamine compounds based on 100% by mass of the sidewall rubber composition may suitably be 1.0 to 4.5% by mass. The lower limit is preferably 1.5% by mass or higher, more preferably 2.0% by mass or higher, still more preferably 2.5% by mass or higher, particularly preferably 2.9% by mass or higher. The upper limit is preferably 4.0% by mass or lower, more preferably 3.5% by mass or lower, still more preferably 3.2% by mass or lower, particularly preferably 3.0% by mass or lower.

From the standpoint of cut resistance during high-load and high-speed running, the sidewall rubber composition may suitably satisfy the following relationship (5):

(5) Isoprene-based rubber content/Combined content of C20-C50 normal alkane and C20-C50 isoalkane < 100
wherein "Isoprene-based rubber content" represents the content (% by mass) of the isoprene-based rubbers based on 100% by mass of the sidewall rubber composition, and "Combined content of C20-C50 normal alkane and C20-C50 isoalkane" represents the combined content (% by mass) of the C20-C50 normal alkanes and C20-C50 isoalkanes based on 100% by mass of the sidewall rubber composition.

When relationship (5) is satisfied so that the amount of the C20-C50 normal alkanes and/or C20-C50 isoalkanes is increased with an increase in the isoprene-based rubber content, it is considered that the normal alkanes and/or isoalkanes can be distributed depending on the amount of the isoprene-based rubbers, and that the normal alkanes and/or isoalkanes may interact with the oxidized carbon blacks in the rubber phase so that excessive blooming of the normal alkanes and/or isoalkanes to the rubber surface is inhibited, resulting in enhanced crack resistance. Thus, it is believed that crack growth starting from a crack on the sidewall surface can be prevented to ensure durability of the sidewall, and therefore a heavy duty tire having improved cut resistance during high-load and high-speed running can be provided.

The value of "Isoprene-based rubber content/Combined content of C20-C50 normal alkane and C20-C50 isoalkane" is preferably 90 or lower, more preferably 85 or lower, still more preferably 80 or lower. The lower limit is not limited, but it is preferably 40 or higher, more preferably 50 or higher, still more preferably 60 or higher, particularly preferably 65 or higher. When the value is within the range indicated above, cut resistance during high-load and high-speed running tends to be improved.

From the standpoint of cut resistance during high-load and high-speed running, the combined content (% by mass) of the C20-C50 normal alkanes and C20-C50 isoalkanes based on 100% by mass of the sidewall rubber composition may suitably be 0.3 to 1.5% by mass. The lower limit is preferably 0.4% by mass or higher, more preferably 0.5% by mass or higher, still more preferably 0.6% by mass or higher. The upper limit is preferably 1.2% by mass or lower, more preferably 1.0% by mass or lower, still more preferably 0.9% by mass or lower, particularly preferably 0.8% by mass or lower.

The sidewall rubber composition may be prepared by known methods. For example, it may be prepared by kneading the components using a rubber kneading machine such as an open roll mill or a Banbury mixer, and vulcanizing the kneaded mixture.

The kneading conditions are as follows. In a base kneading step involving kneading additives other than vulcanizing agents and vulcanization accelerators, the kneading temperature is usually 50 to 200°C, preferably 80 to 190°C, and the kneading time is usually 30 seconds to 30 minutes, preferably one minute to 30 minutes. In a final kneading step involving kneading vulcanizing agents and vulcanization accelerators, the kneading temperature is usually 100°C or lower, preferably from room temperature to 80°C. Moreover, the composition obtained after kneading vulcanizing agents and vulcanization accelerators is usually vulcanized by press vulcanization, for example. The vulcanization temperature is usually 120 to 200°C, preferably 140 to 180°C.

The heavy duty tire can be produced from the above-described sidewall rubber composition by usual methods. Specifically, an unvulcanized sidewall rubber composition containing the above-mentioned components may be extruded into the shape of a sidewall and assembled with other tire components on a tire building machine in a usual manner to build an unvulcanized tire. The unvulcanized tire may be heated and pressurized in a vulcanizer to produce a tire.

The heavy duty tire may be, for example, a pneumatic tire or an airless tire, preferably a pneumatic tire. Examples of the heavy duty tire include tires for trucks and tires for buses. Moreover, the tire may be used as a summer tire, a winter tire (e.g., a studless winter tire, a cold weather tire, a snow tire, a studded tire), an all-season tire, or other tires.

<Structure of heavy duty tire>

An exemplary heavy duty tire according to an embodiment of the present disclosure is described with reference to a drawing.

Fig. 1 shows an exemplary schematic diagram of a truck or bus tire 1 (hereinafter, also referred to as tire 1) as an embodiment of the heavy duty tire. The tire 1 may be a tire having a maximum load capacity stipulated in JIS standard of 2,500 kg or higher, and is configured to include a carcass 6 extending from a tread portion 2 to a bead core 5 of a bead portion 4 through a sidewall portion 3, and a belt layer 7 disposed inward of the tread portion 2 and outward of the carcass 6.

The carcass 6 is formed of at least one carcass ply 6A in which carcass cords are arranged at an angle of for example 70° to 90° (in this example, one carcass ply 6A in which carcass cords are arranged at 90°) with respect to the tire circumferential direction. Although in this example steel cords are used as a preferred example of the carcass cords, organic fiber cords such as aromatic polyamide, nylon, rayon, or polyester cords may also be used as needed. Moreover, the carcass ply 6A includes a ply body portion 6a extending between one bead core 5 and the other bead core 5, and ply folded portions 6b continuously provided at each end of the ply body portion 6a and folded around each bead core 5 from the inside to the outside in the tire axial direction.

The bead portion 4 is provided with a hard apex rubber 8 located between the ply body portion 6a and the ply folded portion 6b and extending radially outward from the bead core 5, thereby reinforcing the area from the bead portion 4 to the sidewall portion 3. The symbol 10 in the figure denotes a clinch rubber forming a bead cover for preventing rim displacement, which is disposed at the bead bottom and outer surface which may contact a rim. The symbol 11 denotes a reinforcing cord layer including steel cords disposed between the clinch rubber 10 and the carcass ply 6A and formed in a L-shape that includes a turn-up portion 11A extending along the outer surface of the ply folded portion 6b and a turn-down portion 11B extending from the lower end of the turn-up portion 11A along the bead bottom.

The belt layer 7 includes two belt plies 7A and 7B in which steel belt cords (steel cords) are obliquely arranged at an angle of 16° to 22° with respect to the tire circumferential direction. The belt plies 7A and 7B are stacked radially inward and outward, respectively, while arranging the respective cords in different oblique directions such that the belt cords of one belt ply intersect the belt cords of the other belt ply.

A sidewall 15 is disposed in the sidewall portion 3. The sidewall 15 is prepared from the above-described sidewall rubber composition which contains predetermined amounts of an isoprene-based rubber, a polybutadiene rubber, and an oxidized carbon black having an average particle size of 30 nm or less and satisfies the relationship (1): Amount of isoprene-based rubber > Amount of polybutadiene rubber. The sidewall 15 satisfies the relationship (2): Thickness at widest point > -0.14 × Amount of polybutadiene rubber + 10.0. As described earlier, the term "Thickness at widest point (thickness of the sidewall at the widest point)" in relationship (2) refers to the thickness of the sidewall measured at a position where the tire inflated to a specified internal pressure has the largest width, and is indicated by "T" in the tire shown in Fig. 1.

EXAMPLES

The chemicals used in the examples and comparative examples are listed below.

NR: TSR20
BR 1: BR150B (cis content: 97% by mass) available from Ube Industries, Ltd.
BR 2: BR1250H (cis content: 40% by mass) available from Zeon Corporation
Carbon black 1: DIABLACK N550 (average particle size: 48 nm, $N_2SA$: 41 $m^2/g$, DBP: 115 ml/100 g) available from Mitsubishi Chemical Corporation
Oxidized carbon black 1: Production Example 1 described below (average particle size: 48 nm, $N_2SA$: 41 $m^2/g$, DBP: 115 ml/100 g)
Carbon black 2: DIABLACK N220 (average particle size: 23 nm, $N_2SA$: 114 $m^2/g$, DBP: 114 ml/100 g) available from Mitsubishi Chemical Corporation
Oxidized carbon black 2: Production Example 2 described below (average particle size: 23 nm, $N_2SA$: 114 $m^2/g$, DBP: 114 ml/100 g)
Carbon black 3: SHOBLACK N134 (average particle size: 18 nm, $N_2SA$: 148 $m^2/g$, DBP: 123 ml/100 g) available from Cabot Japan K.K.
Oxidized carbon black 3: Production Example 3 described below (average particle size: 18 nm, $N_2SA$: 148 $m^2/g$, DBP: 123 ml/100 g)
Oil: PS-32 (mineral oil) available from Idemitsu Kosan Co., Ltd.
Wax: Ozoace wax 0355 (content of C20-C50 normal alkanes and isoalkanes: 100% by mass) available from Nippon Seiro Co., Ltd.
Antioxidant: NOCRAC 6C (N-(1,3-dimethylbutyl)-N'-phenyl-p-phenylenediamine, 6PPD) available from Ouchi Shinko Chemical Industrial Co., Ltd.
Stearic acid: TSUBAKI available from NOF Corporation
Zinc oxide: zinc oxide #2 available from Mitsui Mining & Smelting Co., Ltd.
Sulfur: powdered sulfur available from Tsurumi Chemical Industry Co., Ltd.
Vulcanization accelerator: NOCCELER NS (N-t-butyl-2-benzothiazole sulfenamide) available from Ouchi Shinko Chemical Industrial Co., Ltd.

(Production Example 1)

An amount of 100 parts by mass of carbon black 1 (DIABLACK N550) and 200 parts by mass (effective chlorine concentration for carbon: 20%) of sodium hypochlorite were weighed out and diluted in a four-fold amount (800 parts by mass) of purified water, and the dilution (0.2% aqueous sodium hypochlorite solution) was introduced into a beaker. Next, the solution was stirred for three hours at room temperature while monitoring the pH. After completion of the reaction, the solution was filtered and washed with water. The water washing was carried out using warm water in an amount ten times the amount of the carbon black, and the water washing and filtration were repeated at least two times. Thereafter, the product was dried at 130°C for 24 hours to obtain oxidized carbon black 1.

(Production Example 2)

Oxidized carbon black 2 was prepared as in Production Example 1, except that carbon black 2 (DIABLACK N220) was used instead of carbon black 1 (DIABLACK N550).

(Production Example 3)

Oxidized carbon black 3 was prepared as in Production Example 1, except that carbon black 3 (SHOBLACK N134) was used instead of carbon black 1 (DIABLACK N550).

<Preparation of sidewall rubber composition>

According to each formulation shown in the tables, the materials other than the sulfur and vulcanization accelerator were kneaded using a 1.7 L Banbury mixer (Kobe Steel, Ltd.) at 150°C for five minutes to give a kneaded mixture. Then, the sulfur and vulcanization accelerator were added to the kneaded mixture, and they were kneaded in an open roll mill at 80°C for five minutes to obtain an unvulcanized rubber composition.

<Production of heavy duty tire>

According to the specification (formulation, thickness of sidewall at widest point) in each table, the unvulcanized sidewall rubber composition was formed into the shape of a sidewall and then assembled with other tire components on a tire building machine to build an unvulcanized tire. The unvulcanized tire was vulcanized at 170°C for 10 minutes to prepare a test tire (heavy duty tire).

[Evaluation]

The test tires prepared as above were evaluated as described below. The tables show the results. It should be noted that Comparative Example 3 is used as a standard of comparison in the tables.

<Cut resistance during high-load and high-speed running>

The test tires were mounted on each wheel of a truck. The truck was driven at a high speed (80 km/h) for a distance of 150 km on a dirt course. Then, the tires were removed from the rims, and the sidewall surfaces of the tires were visually observed to evaluate the number and size of cracks. The evaluation results are expressed as an index relative to the standard comparative example (= 100). A higher index indicates better cut resistance during high-load and high-speed running.

[Table 1]

| | Example | | | | | | | | Comparative Example | | | | |
|---|---|---|---|---|---|---|---|---|---|---|---|---|---|
| | 1 | 2 | 3 | 4 | 5 | 6 | 7 | 8 | 1 | 2 | 3 | 4 | 5 |
| NR | 80 | 60 | 60 | 80 | 70 | 85 | 70 | 85 | 60 | 60 | 60 | 60 | 40 |
| BR 1 | 20 | 40 | 40 | 20 | 30 | 15 | 30 | 15 | 40 | 40 | 40 | 40 | 60 |
| BR 2 | | | | | | | | | | | | | |
| Carbon black 1 | | | | | | | | | 50 | | | | |
| Oxidized carbon black 1 | | | | | | | | | | 50 | | | |
| Carbon black 2 | | | | | | | | | | | 50 | | |
| Oxidized carbon black 2 | 55 | 50 | 50 | 50 | 50 | 50 | 55 | 55 | | | | 50 | 50 |
| Oil | 2.0 | 2.0 | 2.0 | 2.0 | 2.0 | 2.0 | 2.0 | 2.0 | 2.0 | 2.0 | 2.0 | 2.0 | 2.0 |
| Wax | 1.0 | 1.0 | 1.0 | 1.0 | 1.0 | 1.0 | 1.0 | 1.0 | 1.0 | 1.0 | 1.0 | 1.0 | 1.0 |
| Antioxidant | 5.0 | 5.0 | 5.0 | 5.0 | 5.0 | 5.0 | 5.0 | 5.0 | 5.0 | 5.0 | 5.0 | 5.0 | 5.0 |
| Stearic acid | 2.0 | 2.0 | 2.0 | 2.0 | 2.0 | 2.0 | 2.0 | 2.0 | 2.0 | 2.0 | 2.0 | 2.0 | 2.0 |
| Zinc oxide | 3.0 | 3.0 | 3.0 | 3.0 | 3.0 | 3.0 | 3.0 | 3.0 | 3.0 | 3.0 | 3.0 | 3.0 | 3.0 |
| Sulfur | 1.5 | 1.5 | 1.5 | 1.5 | 1.5 | 1.5 | 1.5 | 1.5 | 1.5 | 1.5 | 1.5 | 1.5 | 1.5 |

(continued)

| | Example | | | | | | | | Comparative Example | | | | |
|---|---|---|---|---|---|---|---|---|---|---|---|---|---|
| | 1 | 2 | 3 | 4 | 5 | 6 | 7 | 8 | 1 | 2 | 3 | 4 | 5 |
| Vulcanization accelerator | 0.9 | 0.9 | 0.9 | 0.9 | 0.9 | 0.9 | 0.9 | 0.9 | 0.9 | 0.9 | 0.9 | 0.9 | 0.9 |
| Thickness of sidewall at widest point (mm) | 8.0 | 8.0 | 6.0 | 8.0 | 7.0 | 8.5 | 7.0 | 8.5 | 6.0 | 6.0 | 6.0 | 3.0 | 6.0 |
| - 0.14 x Amount of polybutadiene rubber + 10 | 7.2 | 4.4 | 4.4 | 7.2 | 5.8 | 7.9 | 5.8 | 7.9 | 4.4 | 4.4 | 4.4 | 4.4 | 1.6 |
| Isoprene-based rubber content (% by mass) | 46.9 | 36.3 | 36.3 | 48.4 | 42.3 | 51.4 | 41.1 | 49.9 | 36.3 | 36.3 | 36.3 | 36.3 | 24.2 |
| Polybutadiene rubber content (% by mass) | 11.7 | 24.2 | 24.2 | 12.1 | 18.1 | 9.1 | 17.6 | 8.8 | 24.2 | 24.2 | 24.2 | 24.2 | 36.3 |
| Oxidized carbon black content (% by mass) | 32.3 | 30.2 | 30.2 | 30.2 | 30.2 | 30.2 | 32.3 | 32.3 | 0.0 | 0.0 | 0.0 | 30.2 | 30.2 |
| Phenylenediamine compound content (% by mass) | 2.9 | 3.0 | 3.0 | 3.0 | 3.0 | 3.0 | 2.9 | 2.9 | 3.0 | 3.0 | 3.0 | 3.0 | 3.0 |
| Combined content of C20-C50 normal alkane and isoalkane (% by mass) | 0.6 | 0.6 | 0.6 | 0.6 | 0.6 | 0.6 | 0.6 | 0.6 | 0.6 | 0.6 | 0.6 | 0.6 | 0.6 |
| Isoprene-based rubber content /Phenylenediamine compound content | 16 | 12 | 12 | 16 | 14 | 17 | 14 | 17 | 12 | 12 | 12 | 12 | 8 |
| Isoprene-based rubber content /Combined content of C20-C50 normal alkane and isoalkane | 80 | 60 | 60 | 80 | 70 | 85 | 70 | 85 | 60 | 60 | 60 | 60 | 40 |
| Cut resistance during high-load and high-speed running | 160 | 155 | 119 | 157 | 130 | 165 | 135 | 167 | 82 | 89 | 100 | 55 | 77 |

[Table 2]

| | | Example | | | | Comparative Example |
|---|---|---|---|---|---|---|
| | | 2 | 9 | 10 | 11 | 6 |
| NR | | 60 | 60 | 60 | 60 | 60 |
| BR 1 | | 40 | 40 | 40 | 40 | 40 |
| BR 2 | | | | | | |
| Carbon black 1 | | | | | | |

(continued)

| | Example | | | | Comparative Example |
|---|---|---|---|---|---|
| | 2 | 9 | 10 | 11 | 6 |
| Oxidized carbon black 1 | | | | | |
| Carbon black 2 | | | | | 35 |
| Oxidized carbon black 2 | 50 | 45 | 55 | 35 | |
| Oil | 2.0 | 2.0 | 2.0 | 2.0 | 2.0 |
| Wax | 1.0 | 1.0 | 1.0 | 1.0 | 1.0 |
| Antioxidant | 5.0 | 5.0 | 5.0 | 5.0 | 5.0 |
| Stearic acid | 2.0 | 2.0 | 2.0 | 2.0 | 2.0 |
| Zinc oxide | 3.0 | 3.0 | 3.0 | 3.0 | 3.0 |
| Sulfur | 1.5 | 1.5 | 1.5 | 1.5 | 1.5 |
| Vulcanization accelerator | 0.9 | 0.9 | 0.9 | 0.9 | 0.9 |
| Thickness of sidewall at widest point (mm) | 8.0 | 8.0 | 8.0 | 8.0 | 8.0 |
| -0.14 × Amount of polybutadiene rubber + 10 | 4.4 | 4.4 | 4.4 | 4.4 | 4.4 |
| Isoprene-based rubber content (% by mass) | 36.3 | 37.4 | 35.2 | 39.9 | 39.9 |
| Polybutadiene rubber content (% by mass) | 24.2 | 24.9 | 23.5 | 26.6 | 26.6 |
| Oxidized carbon black content (% by mass) | 30.2 | 28.1 | 32.3 | 23.3 | 0.0 |
| Phenylenediamine compound content (% by mass) | 3.0 | 3.1 | 2.9 | 3.3 | 3.3 |
| Combined content of C20-C50 normal alkane and isoalkane (% by mass) | 0.6 | 0.6 | 0.6 | 0.7 | 0.7 |
| Isoprene-based rubber content /Phenylenediamine compound content | 12 | 12 | 12 | 12 | 12 |
| Isoprene-based rubber content /Combined content of C20-C50 normal alkane and isoalkane | 60 | 62 | 59 | 57 | 57 |
| Cut resistance during high-load and high-speed running | 155 | 140 | 158 | 112 | 99 |

[Table 3]

| | Example | |
|---|---|---|
| | 3 | 12 |
| NR | 60 | 60 |
| BR 1 | 40 | |
| BR 2 | | 40 |
| Carbon black 1 | | |
| Oxidized carbon black 1 | | |
| Carbon black 2 | | |
| Oxidized carbon black 2 | 50 | 50 |
| Oil | 2.0 | 2.0 |
| Wax | 1.0 | 1.0 |
| Antioxidant | 5.0 | 5.0 |
| Stearic acid | 2.0 | 2.0 |
| Zinc oxide | 3.0 | 3.0 |

(continued)

|  | Example | |
|---|---|---|
|  | 3 | 12 |
| Sulfur | 1.5 | 1.5 |
| Vulcanization accelerator | 0.9 | 0.9 |
| Thickness of sidewall at widest point (mm) | 6.0 | 6.0 |
| -0.14 × Amount of polybutadiene rubber + 10 | 4.4 | 4.4 |
| Isoprene-based rubber content (% by mass) | 36.3 | 36.3 |
| Polybutadiene rubber content (% by mass) | 24.2 | 24.2 |
| Oxidized carbon black content (% by mass) | 30.2 | 30.2 |
| Phenylenediamine compound content (% by mass) | 3.0 | 3.0 |
| Combined content of C20-C50 normal alkane and isoalkane (% by mass) | 0.6 | 0.6 |
| Isoprene-based rubber content /Phenylenediamine compound content | 12 | 12 |
| Isoprene-based rubber content /Combined content of C20-C50 normal alkane and isoalkane | 60 | 60 |
| Cut resistance during high-load and high-speed running | 119 | 110 |

[Table 4]

|  | Example | | | |
|---|---|---|---|---|
|  | 1 | 13 | 14 | 15 |
| NR | 80 | 80 | 80 | 80 |
| BR 1 | 20 | 20 | 20 | 20 |
| BR 2 |  |  |  |  |
| Carbon black 1 |  |  |  |  |
| Oxidized carbon black 1 |  |  |  |  |
| Carbon black 2 |  |  |  |  |
| Oxidized carbon black 2 | 55 | 55 | 55 | 55 |
| Oil | 2.0 | 2.0 | 2.0 | 2.0 |
| Wax | 1.0 | 1.0 | 1.0 | 1.0 |
| Antioxidant | 5.0 | 4.5 | 5.5 | 2.0 |
| Stearic acid | 2.0 | 2.0 | 2.0 | 2.0 |
| Zinc oxide | 3.0 | 3.0 | 3.0 | 3.0 |
| Sulfur | 1.5 | 1.5 | 1.5 | 1.5 |
| Vulcanization accelerator | 0.9 | 0.9 | 0.9 | 0.9 |
| Thickness of sidewall at widest point (mm) | 8.0 | 8.0 | 8.0 | 8.0 |
| -0.14 × Amount of polybutadiene rubber + 10 | 7.2 | 7.2 | 7.2 | 7.2 |
| Isoprene-based rubber content (% by mass) | 46.9 | 47.1 | 46.8 | 47.8 |
| Polybutadiene rubber content (% by mass) | 11.7 | 11.8 | 11.7 | 11.9 |
| Oxidized carbon black content (% by mass) | 32.3 | 32.4 | 32.2 | 32.9 |
| Phenylenediamine compound content (% by mass) | 2.9 | 2.6 | 3.2 | 1.2 |
| Combined content of C20-C50 normal alkane and isoalkane (% by mass) | 0.6 | 0.6 | 0.6 | 0.6 |
| Isoprene-based rubber content /Phenylenediamine compound content | 16 | 18 | 15 | 40 |

(continued)

| | Example | | | |
|---|---|---|---|---|
| | 1 | 13 | 14 | 15 |
| Isoprene-based rubber content /Combined content of C20-C50 normal alkane and isoalkane | 80 | 80 | 80 | 80 |
| Cut resistance during high-load and high-speed running | 160 | 158 | 163 | 154 |

[Table 5]

| | Example | | | |
|---|---|---|---|---|
| | 1 | 15 | 16 | 17 |
| NR | 80 | 80 | 80 | 80 |
| BR 1 | 20 | 20 | 20 | 20 |
| BR 2 | | | | |
| Carbon black 1 | | | | |
| Oxidized carbon black 1 | | | | |
| Carbon black 2 | | | | |
| Oxidized carbon black 2 | 55 | 55 | 55 | 55 |
| Oil | 2.0 | 2.0 | 2.0 | 2.0 |
| Wax | 1.0 | 1.1 | 0.9 | 0.6 |
| Antioxidant | 5.0 | 5.0 | 5.0 | 5.0 |
| Stearic acid | 2.0 | 2.0 | 2.0 | 2.0 |
| Zinc oxide | 3.0 | 3.0 | 3.0 | 3.0 |
| Sulfur | 1.5 | 1.5 | 1.5 | 1.5 |
| Vulcanization accelerator | 0.9 | 0.9 | 0.9 | 0.9 |
| Thickness of sidewall at widest point (mm) | 8.0 | 8.0 | 8.0 | 8.0 |
| -0.14 × Amount of polybutadiene rubber + 10 | 7.2 | 7.2 | 7.2 | 7.2 |
| Isoprene-based rubber content (% by mass) | 46.9 | 46.9 | 47.0 | 47.1 |
| Polybutadiene rubber content (% by mass) | 11.7 | 11.7 | 11.7 | 11.8 |
| Oxidized carbon black content (% by mass) | 32.3 | 32.3 | 32.3 | 32.4 |
| Phenylenediamine compound content (% by mass) | 2.9 | 2.9 | 2.9 | 2.9 |
| Combined content of C20-C50 normal alkane and isoalkane (% by mass) | 0.6 | 0.6 | 0.5 | 0.4 |
| Isoprene-based rubber content /Phenylenediamine compound content | 16 | 16 | 16 | 16 |
| Isoprene-based rubber content /Combined content of C20-C50 normal alkane and isoalkane | 80 | 73 | 89 | 133 |
| Cut resistance during high-load and high-speed running | 160 | 163 | 156 | 154 |

[Table 6]

| | Example | | | Comparative Example |
|---|---|---|---|---|
| | 18 | 19 | 20 | 7 |
| NR | 70 | 70 | 70 | 70 |
| BR 1 | 30 | 30 | 30 | 30 |

(continued)

| | Example | | | Comparative Example |
|---|---|---|---|---|
| | 18 | 19 | 20 | 7 |
| BR 2 | | | | |
| Carbon black 1 | | | | |
| Oxidized carbon black 1 | | | | |
| Carbon black 3 | | | | 35 |
| Oxidized carbon black 3 | 50 | 45 | 35 | |
| Oil | 2.0 | 2.0 | 2.0 | 2.0 |
| Wax | 1.0 | 1.0 | 1.0 | 1.0 |
| Antioxidant | 5.0 | 5.0 | 5.0 | 5.0 |
| Stearic acid | 2.0 | 2.0 | 2.0 | 2.0 |
| Zinc oxide | 3.0 | 3.0 | 3.0 | 3.0 |
| Sulfur | 1.5 | 1.5 | 1.5 | 1.5 |
| Vulcanization accelerator | 0.9 | 0.9 | 0.9 | 0.9 |
| Thickness of sidewall at widest point (mm) | 7.0 | 7.0 | 7.0 | 7.0 |
| $-0.14 \times$ Amount of polybutadiene rubber + 10 | 5.8 | 5.8 | 5.8 | 5.8 |
| Isoprene-based rubber content (% by mass) | 42.3 | 43.6 | 46.5 | 46.5 |
| Polybutadiene rubber content (% by mass) | 18.1 | 18.7 | 19.9 | 19.9 |
| Oxidized carbon black content (% by mass) | 30.2 | 28.1 | 23.3 | 23.3 |
| Phenylenediamine compound content (% by mass) | 3.0 | 3.1 | 3.3 | 3.3 |
| Combined content of C20-C50 normal alkane and isoalkane (% by mass) | 0.6 | 0.6 | 0.7 | 0.7 |
| Isoprene-based rubber content /Phenylenediamine compound content | 14 | 14 | 14 | 14 |
| Isoprene-based rubber content /Combined content of C20-C50 normal alkane and isoalkane | 71 | 70 | 67 | 67 |
| Cut resistance during high-load and high-speed running | 152 | 136 | 110 | 101 |

As shown in the tables, excellent cut resistance during high-load and high-speed running was exhibited in the heavy duty tires of the examples which included a sidewall including a sidewall rubber composition that contained predetermined amounts of an isoprene-based rubber, a polybutadiene rubber, and an oxidized carbon black having an average particle size of 30 nm or less and which satisfied relationships (1) and (2).

Exemplary embodiments of the present disclosure include:

Embodiment 1. A heavy duty tire, including a sidewall including a sidewall rubber composition,

the sidewall rubber composition containing at least one isoprene-based rubber, at least one polybutadiene rubber, and at least one oxidized carbon black having an average particle size of 30 nm or less,
the sidewall rubber composition containing, based on 100% by mass of the rubber components therein, at least 5% by mass but less than 50% by mass of the at least one polybutadiene rubber,
the heavy duty tire satisfying the following relationships (1) and (2):

(1) Amount of isoprene-based rubber > Amount of polybutadiene rubber
wherein "Amount of isoprene-based rubber" and "Amount of polybutadiene rubber" represent the amounts (% by mass) of the at least one isoprene-based rubber and the at least one polybutadiene rubber, respectively, based on 100% by mass of the rubber components in the sidewall rubber composition;

(2) Thickness at widest point > -0.14 × Amount of polybutadiene rubber + 10.0
wherein "Thickness at widest point" represents the thickness (mm) of the sidewall at the widest point, and "Amount of polybutadiene rubber" represents the amount (% by mass) of the at least one polybutadiene rubber based on 100% by mass of the rubber components in the sidewall rubber composition.

Embodiment 2. The heavy duty tire according to Embodiment 1,
wherein the heavy duty tire satisfies the following relationship (3):

(3) Content of oxidized carbon black having average particle size of 30 nm or less > Polybutadiene rubber content
wherein "Content of oxidized carbon black having average particle size of 30 nm or less" and "Polybutadiene rubber content" represent the contents (% by mass) of the at least one oxidized carbon black and the at least one polybutadiene rubber, respectively, based on 100% by mass of the sidewall rubber composition.

Embodiment 3. The heavy duty tire according to Embodiment 1 or 2,
wherein the polybutadiene rubber includes a polybutadiene rubber having a cis content of 95% by mass or higher.
Embodiment 4. The heavy duty tire according to any one of Embodiments 1 to 3,
wherein the sidewall rubber composition contains at least one phenylenediamine compound and satisfies the following relationship (4):

(4) Isoprene-based rubber content/Phenylenediamine compound content < 35
wherein "Isoprene-based rubber content" and "Phenylenediamine compound content" represent the contents (% by mass) of the at least one isoprene-based rubber and the at least one phenylenediamine compound, respectively, based on 100% by mass of the sidewall rubber composition.

Embodiment 5. The heavy duty tire according to any one of Embodiments 1 to 4,
wherein the sidewall rubber composition contains at least one C20-C50 normal alkane and/or C20-C50 isoalkane and satisfies the following relationship (5):

(5) Isoprene-based rubber content/Combined content of C20-C50 normal alkane and C20-C50 isoalkane < 100
wherein "Isoprene-based rubber content" represents the content (% by mass) of the at least one isoprene-based rubber based on 100% by mass of the sidewall rubber composition, and "Combined content of C20-C50 normal alkane and C20-C50 isoalkane" represents the combined content (% by mass) of the at least one C20-C50 normal alkane and C20-C50 isoalkane based on 100% by mass of the sidewall rubber composition.

Embodiment 6. The heavy duty tire according to any one of Embodiments 1 to 5,
wherein the thickness of the sidewall at the widest point is at least 4.0 mm but less than 10.0 mm.
Embodiment 7. The heavy duty tire according to any one of Embodiments 1 to 6,
wherein the sidewall rubber composition contains, based on 100% by mass thereof, 1.5 to 4.0% by mass of at least one phenylenediamine compound.
Embodiment 8. The heavy duty tire according to any one of Embodiments 1 to 7,
wherein the sidewall rubber composition contains, based on 100% by mass thereof, 0.5 to 1.0% by mass in total of at least one C20-C50 normal alkane and/or C20-C50 isoalkane.

Provided is a heavy duty tire having improved cut resistance during high-load and high-speed running. Included is a heavy duty tire which includes a sidewall including a sidewall rubber composition, the sidewall rubber composition containing at least one isoprene-based rubber, at least one polybutadiene rubber, and at least one oxidized carbon black having an average particle size of 30 nm or less; the sidewall rubber composition containing, based on 100% by mass of the rubber components therein, at least 5% by mass but less than 50% by mass of the at least one polybutadiene rubber; the sidewall rubber composition satisfying the following relationships (1) and (2): (1) Amount of isoprene-based rubber > Amount of polybutadiene rubber wherein "Amount of isoprene-based rubber" and "Amount of polybutadiene rubber" represent the amounts (% by mass) of the at least one isoprene-based rubber and the at least one polybutadiene rubber, respectively, based on 100% by mass of the rubber components in the sidewall rubber composition; (2) Thickness at widest point > -0.14 × Amount of polybutadiene rubber + 10.0 wherein "Thickness at widest point" represents the thickness (mm) of the sidewall at the widest point, and "Amount of polybutadiene rubber" represents the amount (% by mass) of the at least one polybutadiene rubber based on 100% by mass of the rubber components in the sidewall rubber composition.

REFERENCE SIGNS LIST

1 truck or bus tire
2 tread portion
3 sidewall portion
4 bead portion
5 bead core
6 carcass
6A carcass ply
6a ply body portion
6b ply folded portion
7 belt layer
7A and 7B inner and outer belt plies
8 apex rubber
10 clinch rubber
11 reinforcing cord layer
11A turn-up portion
11B turn-down portion
15 sidewall

**Claims**

1. A heavy duty tire, comprising a sidewall comprising a sidewall rubber composition,

   the sidewall rubber composition comprising at least one isoprene-based rubber, at least one polybutadiene rubber, and at least one oxidized carbon black having an average particle size of 30 nm or less,
   the sidewall rubber composition comprising, based on 100% by mass of the rubber components therein, at least 5% by mass but less than 50% by mass of the at least one polybutadiene rubber,
   the heavy duty tire satisfying the following relationships (1) and (2):

   (1) Amount of isoprene-based rubber > Amount of polybutadiene rubber wherein the amount of isoprene-based rubber and the amount of polybutadiene rubber represent the amounts, expressed in % by mass, of the at least one isoprene-based rubber and the at least one polybutadiene rubber, respectively, based on 100% by mass of the rubber components in the sidewall rubber composition;
   (2) Thickness at widest point > -0.14 × Amount of polybutadiene rubber + 10.0

   wherein the thickness at widest point represents the thickness (mm) of the sidewall at the widest point, and the amount of polybutadiene rubber represents the amount, expressed in % by mass, of the at least one polybutadiene rubber based on 100% by mass of the rubber components in the sidewall rubber composition, and wherein the average particle size refers to a number average particle size as determined using a transmission electron microscope.

2. The heavy duty tire according to claim 1,
   wherein the heavy duty tire satisfies the following relationship (3):

   Content of oxidized carbon black having average particle size of 30 nm or less > Polybutadiene rubber content                    (3)

   wherein the content of oxidized carbon black having average particle size of 30 nm or less and the polybutadiene rubber content represent the contents, expressed in % by mass, of the at least one oxidized carbon black and the at least one polybutadiene rubber, respectively, based on 100% by mass of the sidewall rubber composition.

3. The heavy duty tire according to claim 1 or 2,
   wherein the polybutadiene rubber comprises a polybutadiene rubber having a cis content of 95% by mass or higher.

4. The heavy duty tire according to any one of claims 1 to 3,

wherein the sidewall rubber composition comprises at least one phenylenediamine compound and satisfies the following relationship (4): (4) Isoprene-based rubber content/Phenylenediamine compound content < 35 wherein the isoprene-based rubber content and the phenylenediamine compound content represent the contents, expressed in % by mass, of the at least one isoprene-based rubber and the at least one phenylenediamine compound, respectively, based on 100% by mass of the sidewall rubber composition.

5. The heavy duty tire according to any one of claims 1 to 4, wherein the sidewall rubber composition comprises at least one C20-C50 normal alkane and/or C20-C50 isoalkane and satisfies the following relationship (5):

(5) Isoprene-based rubber content/Combined content of C20-C50 normal alkane and C20-C50 isoalkane < 100 wherein the isoprene-based rubber content represents the content (% by mass) of the at least one isoprene-based rubber based on 100% by mass of the sidewall rubber composition, and the combined content of C20-C50 normal alkane and C20-C50 isoalkane represents the combined content, expressed in % by mass, of the at least one C20-C50 normal alkane and C20-C50 isoalkane based on 100% by mass of the sidewall rubber composition.

6. The heavy duty tire according to any one of claims 1 to 5, wherein the thickness of the sidewall at the widest point is at least 4.0 mm but less than 10.0 mm.

7. The heavy duty tire according to any one of claims 1 to 6, wherein the sidewall rubber composition comprises, based on 100% by mass thereof, 1.5 to 4.0% by mass of at least one phenylenediamine compound.

8. The heavy duty tire according to any one of claims 1 to 7, wherein the sidewall rubber composition comprises, based on 100% by mass thereof, 0.5 to 1.0% by mass in total of at least one C20-C50 normal alkane and/or C20-C50 isoalkane.

**Patentansprüche**

1. Schwerlastreifen, umfassend eine Seitenwand, die eine Seitenwand-Kautschukzusammensetzung umfasst,

wobei die Seitenwand-Kautschukzusammensetzung mindestens einen Kautschuk auf Isoprenbasis, mindestens einen Polybutadienkautschuk und mindestens einen oxidierten Ruß mit einer durchschnittlichen Partikelgröße von 30 nm oder weniger umfasst, wobei die Seitenwand-Kautschukzusammensetzung, bezogen auf 100 Masse-% der darin enthaltenen Kautschukkomponenten, mindestens 5 Masse-%, aber weniger als 50 Masse-% des mindestens einen Polybutadienkautschuks umfasst, wobei der Schwerlastreifen die folgenden Beziehungen (1) und (2) erfüllt:

(1) Menge an Isopren-basiertem Kautschuk > Menge an Polybutadienkautschuk wobei die Menge an Isopren-basiertem Kautschuk und die Menge an Polybutadien-Kautschuk die Massenanteile in % des mindestens einen Isopren-basierten Kautschuks und des mindestens einen Polybutadien-Kautschuks, bezogen auf 100 Masse-% der Kautschukkomponenten in der Seitenwandkautschukmischung, darstellen; (2) Dicke an der breitesten Stelle > -0,14 × Menge an Polybutadienkautschuk + 10,0 wobei die Dicke an der breitesten Stelle die Dicke (mm) der Seitenwand an der breitesten Stelle darstellt und die Menge an Polybutadienkautschuk die Menge, ausgedrückt in Masse-%, des mindestens einen Polybutadienkautschuks, bezogen auf 100 Masse-% der Kautschukkomponenten in der Seitenwand-Kautschukzusammensetzung, darstellt, und wobei die durchschnittliche Partikelgröße sich auf eine durchschnittliche Partikelgröße bezieht, die unter Verwendung eines Transmissionselektronenmikroskops bestimmt wurde..

2. Schwerlastreifen nach Anspruch 1,

wobei der Schwerlastreifen die folgende Beziehung (3) erfüllt:

(3) Gehalt an oxidiertem Ruß mit einer durchschnittlichen Partikelgröße von 30 nm oder weniger > Gehalt an Polybutadienkautschuk

wobei der Gehalt an oxidiertem Ruß mit einer durchschnittlichen Partikelgröße von 30 nm oder weniger und der Polybutadienkautschukgehalt den Gehalt, ausgedrückt in Masse-%, des mindestens einen oxidierten Rußes bzw. des mindestens einen Polybutadienkautschuks, bezogen auf 100 Masse-% der Seitenwand-Kautschukzusammensetzung, darstellen.

3. Schwerlastreifen nach Anspruch 1 oder 2, wobei der Polybutadienkautschuk einen Polybutadienkautschuk mit einem Cis-Gehalt von 95 Masse-% oder mehr umfasst.

4. Schwerlastreifen nach einem der Ansprüche 1 bis 3,

wobei die Seitenwand-Kautschukzusammensetzung mindestens eine Phenylendiaminverbindung umfasst und die folgende Beziehung (4) erfüllt: (4) Isopren-basierter Kautschukgehalt/Phenylendiaminverbindung-Gehalt < 35

wobei der Isopren-basierte Kautschukgehalt und der Phenylendiaminverbindung-Gehalt den Gehalt, ausgedrückt in Masse-%, des mindestens einen Isopren-basierten Kautschuks bzw. der mindestens einen Phenylendiaminverbindung, bezogen auf 100 Masse-% der Seitenwandkautschukmischung, darstellen.

5. Schwerlastreifen nach einem der Ansprüche 1 bis 4, wobei die Seitenwand-Kautschukzusammensetzung mindestens ein C20-C50-Normalalkan und/oder C20-C50-Isoalkan umfasst und die folgende Beziehung (5) erfüllt:

Isopren-basierter Kautschukgehalt/Gesamtgehalt an C20-C50-Normalalkan und C20-C50-Isoalkan < 100     (5)

wobei der Gehalt an Kautschuk auf Isoprenbasis den Gehalt (Masse-%) des mindestens einen Kautschuks auf Isoprenbasis, bezogen auf 100 Masse-% der Seitenwandkautschukmischung, und der Gesamtgehalt an C20-C50-Normalalkan und C20-C50-Isoalkan den Gesamtgehalt, ausgedrückt in Masse-%, des mindestens einen C20-C50-Normalalkan und C20-C50-Isoalkan, bezogen auf 100 Masse-% der Seitenwand-Kautschukzusammensetzung, darstellen.

6. Schwerlastreifen nach einem der Ansprüche 1 bis 5, wobei die Dicke der Seitenwand an der breitesten Stelle mindestens 4,0 mm, aber weniger als 10,0 mm beträgt.

7. Schwerlastreifen nach einem der Ansprüche 1 bis 6, wobei die Seitenwand-Kautschukzusammensetzung, bezogen auf 100 Masse-% davon, 1,5 bis 4,0 Masse-% mindestens einer Phenylendiaminverbindung umfasst.

8. Schwerlastreifen nach einem der Ansprüche 1 bis 7, wobei die Seitenwandkautschukmischung, bezogen auf 100 Masse-% davon, insgesamt 0,5 bis 1,0 Masse-% mindestens eines C20-C50-Normalalkan und/oder C20-C50-Isoalkan umfasst.

**Revendications**

1. Pneu poids lourd, comprenant un flanc comprenant une composition de caoutchouc du flanc,

la composition de caoutchouc du flanc comprenant au moins un caoutchouc à base d'isoprène, au moins un caoutchouc polybutadiène et au moins un noir de carbone oxydé ayant une taille moyenne de particules de 30 nm ou moins,

la composition de caoutchouc du flanc comprenant, sur la base de 100 % en masse des composants de caoutchouc qu'elle contient, au moins 5 % en masse mais moins de 50 % en masse de l'au moins un caoutchouc polybutadiène,

le pneu poids lourd satisfaisant aux relations (1) et (2) suivantes :

(1) quantité de caoutchouc à base d'isoprène > quantité de caoutchouc polybutadiène, dans lequel la quantité de caoutchouc à base d'isoprène et la quantité de caoutchouc polybutadiène représentent les quantités, exprimées en % en masse, de l'au moins un caoutchouc à base d'isoprène et de l'au moins un caoutchouc polybutadiène, respectivement, sur la base de 100 % en masse des composants de caoutchouc dans la composition de caoutchouc du flanc ;

(2) épaisseur au point le plus large > -0,14 × quantité de caoutchouc polybutadiène + 10,0,

dans lequel l'épaisseur au point le plus large représente l'épaisseur (mm) du flanc au point le plus large, et la quantité de caoutchouc polybutadiène représente la quantité, exprimée en % en masse, de l'au moins un caoutchouc polybutadiène sur la base de 100 % en masse des composants de caoutchouc dans la composition de caoutchouc du flanc, et dans lequel la taille moyenne de particules fait référence à un nombre taille moyenne de particules comme déterminé en usant un microscope électronique à transmission.

2. Pneu poids lourd selon la revendication 1,

dans lequel le pneu poids lourd satisfait à la relation (3) suivante :

(3) teneur en noir de carbone oxydé ayant une taille moyenne de particules inférieure ou égale à 30 nm > teneur en caoutchouc polybutadiène,

dans lequel la teneur en noir de carbone oxydé ayant une taille moyenne de particules de 30 nm ou moins et la teneur en caoutchouc polybutadiène représentent les teneurs, exprimées en % en masse, de l'au moins un noir de carbone oxydé et de l'au moins un caoutchouc polybutadiène, respectivement, sur la base de 100 % en masse de la composition de caoutchouc du flanc.

3. Pneu poids lourd selon la revendication 1 ou 2,
dans lequel le caoutchouc polybutadiène comprend un caoutchouc polybutadiène ayant une teneur en cis de 95 % en masse ou plus.

4. Pneu poids lourd selon l'une quelconque des revendications 1 à 3,

dans lequel la composition de caoutchouc de flanc comprend au moins un composé de phénylènediamine et satisfait à la relation (4) suivante :

(4) teneur en caoutchouc à base d'isoprène/teneur en composé de phénylènediamine < 35,

dans lequel la teneur en caoutchouc à base d'isoprène et la teneur en composé de phénylènediamine représentent les teneurs, exprimées en % en masse, de l'au moins un caoutchouc à base d'isoprène et de l'au moins un composé de phénylènediamine, respectivement, sur la base de 100 % en masse de la composition de caoutchouc du flanc.

5. Pneu poids lourd selon l'une quelconque des revendications 1 à 4,

dans lequel la composition de caoutchouc du flanc comprend au moins un alcane normal en C20-C50 et/ou un isoalcane en C20-C50 et satisfait à la relation (5) suivante :

(5) teneur en caoutchouc à base d'isoprène/teneur combinée en alcane normal en C20-C50 et en isoalcane en C20-C50 < 100,

dans lequel la teneur en caoutchouc à base d'isoprène représente la teneur (% en masse) de l'au moins un caoutchouc à base d'isoprène sur la base de 100 % en masse de la composition de caoutchouc du flanc, et la teneur combinée en alcane normal en C20-C50 et en isoalcane en C20-C50 représente la teneur combinée, exprimée en % en masse, de l'au moins un alcane normal en C20-C50 et de l'isoalcane en C20-C50 par rapport à 100 % en masse de la composition de caoutchouc du flanc.

6. Pneu poids lourd selon l'une quelconque des revendications 1 à 5, dans lequel l'épaisseur du flanc au point le plus large est d'au moins 4,0 mm mais inférieure à 10,0 mm.

7. Pneu poids lourd selon l'une quelconque des revendications 1 à 6,
dans lequel la composition de caoutchouc du flanc comprend, sur la base de 100 % en masse de celle-ci, 1,5 à 4,0 % en masse de l'au moins un composé de phénylènediamine.

8. Pneu poids lourd selon l'une quelconque des revendications 1 à 7,
dans lequel la composition de caoutchouc du flanc comprend, sur la base de 100 % en masse de celle-ci, 0,5 à 1,0 % en masse au total de l'au moins un alcane normal en C20-C50 et/ou un isoalcane en C20-C50.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020131346 A
- US 20130046064 A